Europäisches Patentamt

European Patent Office

Office européen des brevets

(19)

(11) **EP 1 243 132 B1**

(12) **FASCICULE DE BREVET EUROPEEN**

(45) Date de publication et mention
de la délivrance du brevet:
**06.05.2004 Bulletin 2004/19**

(51) Int Cl.$^7$: **H04N 7/00**

(86) Numéro de dépôt international:
**PCT/FR2000/003717**

(21) Numéro de dépôt: **00990832.8**

(22) Date de dépôt: **28.12.2000**

(87) Numéro de publication internationale:
**WO 2001/049044 (05.07.2001 Gazette 2001/27)**

(54) **PROCEDE DE COMPENSATION EN TEMPERATURE DE LA SENSIBILITE D'UN DETECTEUR D'IMAGE ET DETECTEUR D'IMAGE POUR LA MISE EN OEUVRE DU PROCEDE**

VERFAHREN ZUR TEMPERATURKOMPENSATION DER EMPFINDLICHKEIT EINES BILDDETEKTORS UND BILDDETEKTOR ZUR DURCHFÜHRUNG DES VERFAHRENS

METHOD FOR TEMPERATURE COMPENSATION OF AN IMAGE SENSOR SENSITIVITY AND IMAGE SENSOR FOR CARRYING OUT THE METHOD

(84) Etats contractants désignés:
**AT BE CH CY DE DK ES FI FR GB GR IE IT LI LU MC NL PT SE TR**

(30) Priorité: **28.12.1999 FR 9916592**

(43) Date de publication de la demande:
**25.09.2002 Bulletin 2002/39**

(73) Titulaire: **Trixell S.A.S.**
**38430 Moirans (FR)**

(72) Inventeur: **DUCOURANT, Thierry**
**Thomson-CSF Propriété Intell.**
**F-94117 Arcueil Cedex (FR)**

(74) Mandataire: **Guérin, Michel**
**THALES Intellectual Property,**
**31-33 avenue Aristide Briand**
**94117 Arcueil Cédex (FR)**

(56) Documents cités:
**EP-A- 0 541 332**        **WO-A-99/30506**
**US-A- 5 861 913**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention se rapporte aux détecteurs d'images à l'état solide et se propose d'éliminer les variations de leur sensibilité notamment celles dues à des variations de température.

Dans ces détecteurs d'images, l'acquisition d'une image s'effectue à l'aide de plusieurs points photosensibles formés chacun d'une photodiode et d'un interrupteur. Les points photosensibles sont réalisés à l'aide de techniques de dépôts en films minces de matériaux semi-conducteurs tel que le silicium amorphe hydrogéné (aSiH). Ces points photosensibles arrangés en matrice ou barrette permettent de détecter des images contenues dans un rayonnement visible ou proche du visible. Les signaux qu'ils produisent sont ensuite numérisés de manière à pouvoir être stockés et traités aisément.

Ces arrangements de points photosensibles trouvent une application particulièrement intéressante dans le domaine médical ou celui du contrôle industriel où ils détectent des images radiologiques. Il suffit de les recouvrir d'un scintillateur et d'exposer ce dernier à un rayonnement X porteur d'une image radiologique. Le scintillateur convertit le rayonnement X incident en un rayonnement dans la bande de longueurs d'onde auxquelles sont sensibles les points photosensibles.

On trouve maintenant des matrices photosensibles de grandes dimensions qui peuvent posséder plusieurs millions de points photosensibles.

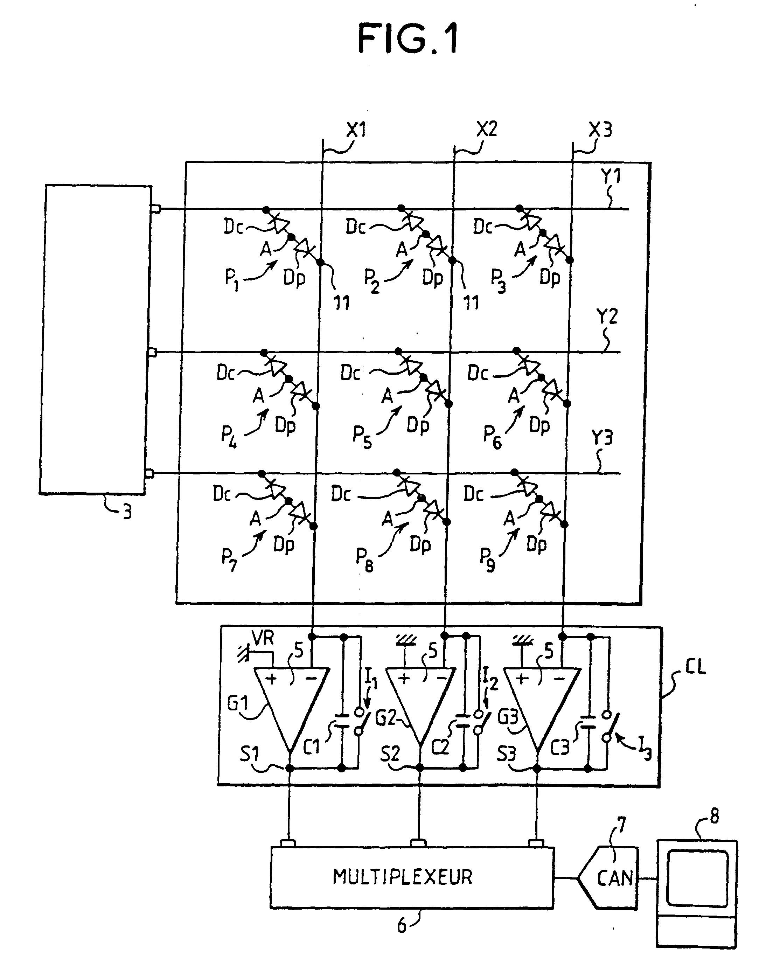

On se réfère à la figure 1 qui montre un détecteur d'image de type connu en matrice. Il ne possède que neuf points photosensibles pour ne pas surcharger inutilement la figure. Chaque point photosensible P1 à P9 est formé d'une photodiode Dp et d'un élément à fonction d'interrupteur Dc représenté sous la forme d'une diode de commutation. On aurait pu choisir comme élément à fonction d'interrupteur un transistor. La photodiode Dp et la diode de commutation Dc sont reliées entre elles dans un montage tête-bêche.

Chaque point photosensible P1 à P9 est connecté entre un conducteur de ligne Y1 à Y3 et un conducteur de colonne X1 à X3. Les conducteurs de ligne Y1 à Y3 sont reliés à un dispositif d'adressage 3 connu sous la dénomination anglo-saxonne de « driver ». Il peut y avoir plusieurs « drivers » 3 si la matrice est de grande taille. Le dispositif d'adressage 3 comporte généralement des registres à décalage, des circuits de commutation, des circuits d'horloge. Le dispositif d'adressage 3 porte les conducteurs de ligne Y1 à Y3 à des tensions qui, soit isolent les points photosensibles P1 à P3 reliés au même conducteur de ligne Y1 du reste de la matrice, soit les mettent en conduction. Le dispositif d'adressage 3 permet de réaliser un adressage séquentiel des conducteurs de ligne Y1 à Y3.

Les conducteurs de colonne X1 à X3 sont reliés à un dispositif de lecture CL.

Lors d'une phase de prise d'image durant laquelle les points photosensibles P1 à P9 sont exposés à une information à capter et qu'ils sont dans un état réceptif, c'est-à-dire que leurs diodes photosensibles Dp et de commutation Dc polarisées en inverse constituent chacune une capacité, il se produit une accumulation de charges au point de jonction A entre les deux diodes Dp, Dc. La quantité de charges est sensiblement proportionnelle à l'intensité du signal reçu que ce soit un éclairement très intense, dans la mesure où l'on reste dans la gamme linéaire de détection des diodes photosensibles, ou l'obscurité. Suit ensuite une phase de lecture, durant laquelle on applique aux conducteurs de ligne Y1 à Y3 séquentiellement une impulsion de lecture qui met les photodiodes Dp en conduction et permet l'évacuation des charges accumulées dans les conducteurs de colonne X1 à X3 vers le dispositif de lecture CL et leur intégration.

On va voir plus en détails le dispositif de lecture CL. Il comporte autant de circuits de lecture 5 que de conducteurs de colonne X1 à X3 et ces circuits de lecture sont de type circuit intégrateur de charges. Chaque point photosensible est relié à un circuit de lecture 5. Chaque circuit intégrateur de charges est réalisé par un amplificateur opérationnel G1 à G3 monté en intégrateur à l'aide d'un condensateur de lecture C1 à C3. Chaque condensateur C1 à C3 est monté entre l'entrée négative de l'amplificateur opérationnel G1 à G3 et sa sortie S1 à S3. Chaque conducteur de colonne X1 à X3 est relié à l'entrée négative d'un amplificateur opérationnel G1 à G3. L'entrée positive de chacun des amplificateurs opérationnels G1 à G3 est portée à une tension de référence d'entrée VR constante qui impose à chaque conducteur de colonne X1 à X3 cette tension de référence. Chaque amplificateur opérationnel G1 à G3 comporte un interrupteur de remise à zéro I1 à I3 monté en parallèle avec le condensateur C1 à C 3.

Les sorties S1 à S3 des circuits intégrateurs sont connectées à un dispositif de multiplexage 6 qui délivre en série des signaux correspondant aux charges qui ont été intégrées par les circuits intégrateurs de charges. En phase de lecture ces signaux correspondent aux charges accumulées pendant un temps d'intégration par tous les points photosensibles d'une même ligne. Les signaux délivrés par le dispositif de multiplexage 6 sont ensuite numérisés dans au moins un convertisseur analogique-numérique 7, les signaux numérisés en sortie du convertisseur analogique-numérique 7 traduisent le contenu de l'image à détecter. Ces signaux numérisés sont transmis à un système de gestion 8 qui peut les stocker, les traiter et les afficher.

On s'aperçoit que la sensibilité de tels détecteurs varie, ce qui entraîne à la fois des variations locales et globales de la luminosité de l'image détectée. La variation de la sensibilité a plusieurs origines. Il y a d'une part une variation spatiale et d'autre part une variation thermique. Cela signifie d'une part que deux points photosensibles du détecteur peuvent ne pas donner la même réponse lorsqu'ils sont exposés exactement à un même flux lumineux, et d'autre part qu'un point photosensible exposé à un même flux lumineux ne donne pas la même réponse à 25°C qu'à 35°C. Ces défauts sont dus en partie aux composants semi-conducteurs constituant les points photosensibles qui ne proviennent pas tous du même lot de fabrication et en partie au matériau scintillateur utilisé en radiologie. On obtient des images avec des zones non uniformes qui ne devraient pas s'y trouver et qui sont de plus en plus pales plus la température augmente.

Si l'on sait s'affranchir de la variation spatiale de la sensibilité en effectuant une correction de l'image avec une image dite de gain, il n'est pas possible d'utiliser l'image de gain pour s'affranchir des variations de la sensibilité à cause thermique.

L'image de gain est une image faite avec un éclairement uniforme calibré en l'absence de sujet ou d'objet à examiner. Elle permet bien de corriger les variations de sensibilité spatiales puisqu'avec un éclairement uniforme l'image devrait être uniforme. Cette image de gain est réalisée avec une fréquence très faible, de l'ordre de l'année. Les signaux délivrés par les points photosensibles lors de la lecture de l'image de gain sont stockés dans le dispositif de gestion 8, et servent ensuite pour corriger n'importe quelle image utile, de l'inhomogénéité spatiale de sensibilité.

Cette méthode ne peut être utilisée pour s'affranchir des variations de la sensibilité dont la cause est thermique : il faudrait réaliser des images de gain au rythme des variations de la température, ce qui augmenterait de manière importante la fréquence de prise des images de gain. Ce n'est pas compatible avec la manière dont les opérateurs utilisent de tels détecteurs d'images.

La présente invention propose d'utiliser une image de gain ou une quasi image de gain adaptée à la température ambiante pour s'affranchir des variations de la sensibilité du détecteur d'image notamment à cause thermique, mais cette image de gain n'est pas simplement prise juste avant d'effectuer la correction pour être adaptée à la température ambiante, elle est élaborée à partir d'un calcul conduisant à déterminer la température ambiante.

Pour y parvenir la présente invention propose un procédé de compensation en température de la sensibilité d'un détecteur d'image comportant des points photosensibles avec chacun une photodiode, reliés à des circuits de lecture, les points photosensibles étant partagés en des points photosensibles détecteurs capables de détecter une image lorsqu'ils sont exposés à une information porteuse de l'image et qu'ils sont sensibles à cette information, et en des points aveugles protégés de l'information, caractérisé en ce qu'il consiste :

- lorsque les points photosensibles sont portés à une température de référence, à calculer un courant de fuite moyen dans les photodiodes des points photosensibles aveugles et à élaborer une moyenne à partir des signaux délivrés par les points photosensibles aveugles lors d'une première opération de lecture,
- lorsque les points photosensibles sont portés à une température ambiante à déterminer, à élaborer une moyenne à partir des signaux délivrés par les points photosensibles aveugles lors d'une autre opération de lecture,
- à calculer la température ambiante à partir du courant de fuite moyen et de l'écart entre les deux moyennes,
- à élaborer une image de gain ou une quasi image de gain adaptée à la température ambiante,
- à corriger une image prise à la température ambiante avec l'image de gain ou la quasi image de gain.

De préférence les signaux délivrés pour l'élaboration de la première moyenne et pour l'élaboration de la moyenne à la température ambiante à déterminer correspondent à des charges intégrées avec un premier temps d'intégration sensiblement égal au temps d'intégration nominal du détecteur d'image.

Pour le calcul du courant de fuite moyen à la température de référence on peut, à la température de référence, élaborer un couple de moyennes à partir des signaux délivrés par les points photosensibles aveugles avec deux temps d'intégration différents et réaliser une calibration avec le couple de moyennes.

L'une des moyennes du couple est de manière avantageuse la première moyenne. L'autre moyenne du couple correspond à des charges intégrées avec un temps d'intégration supérieur au temps d'intégration nominal du détecteur d'image.

L'élaboration de l'image de gain adaptée à la température ambiante déterminée peut se faire à partir d'une série d'images de gain stockées au préalable dans un dispositif à mémoire, chacune d'entre elles ayant été prise à une température particulière différente, l'ensemble de ces températures particulières formant une plage de températures auxquelles le détecteur d'image est susceptible de fonctionner.

L'élaboration de la quasi image de gain adaptée à la température ambiante déterminée peut se faire, de manière plus avantageuse, à partir d'une image de gain de base prise à une température de base, corrigée à l'aide d'un coefficient de variation de l'image de gain de base en fonction de la température et compte tenu de la différence entre la température ambiante déterminée et la température de base.

La température de base peut être la température de référence.

L'élaboration des moyennes pourront se faire avantageusement à partir d'images noires.

La présente invention concerne également un détecteur d'image pour la mise en oeuvre du procédé de compensation, comportant des points photosensibles avec chacun une photodiode, ces points photosensibles étant reliés à des circuits de lecture. Ces points photosensibles sont partagés en des points photosensibles détecteurs capables de détecter une image lorsqu'ils sont exposés à une information porteuse de l'image et en des points aveugles protégés de l'information. Le détecteur comporte des moyens qui délivrent des moyennes à partir des signaux délivrés par les points photosensibles aveugles, des moyens pour calculer le courant de fuite moyen dans les photodiodes des points photosensibles aveugles, des moyens pour calculer la température ambiante à partir du courant de fuite moyen et d'un écart entre moyennes, des moyens pour élaborer l'image de gain ou la quasi image de gain à partir de la température ambiante calculée et des moyens pour corriger une image prise à la température ambiante avec l'image de gain ou la quasi image de gain.

Les moyens pour calculer le courant de fuite moyen reçoivent les moyennes des signaux délivrés par les points photosensibles aveugles sous une forme numérique.

Les moyens pour élaborer l'image de gain peuvent comporter un dispositif à mémoire contenant une ou plusieurs images de gains, chacune correspondant à une température.

Les moyens pour élaborer la quasi image de gain peuvent comporter un dispositif à mémoire contenant une image de gain de base prise à une température de base et un coefficient de variation de l'image de base avec la température.

Il est préférable que les points photosensibles aveugles soient reliés à des portions extrêmes de conducteurs auxquels sont reliés les points photosensibles détecteurs.

Les points photosensibles aveugles sont recouverts d'un matériau opaque à l'information reçue par les points photosensibles détecteurs, ce matériau étant notamment de la peinture noire.

Les points photosensibles détecteurs sont recouverts d'un matériau scintillateur qui transforme un rayonnement X en un rayonnement auquel ils sont sensibles, les points photosensibles aveugles étant recouverts d'un matériau opaque au rayonnement X, tel que du plomb.

Le matériau opaque à l'information se trouve entre le matériau opaque au rayonnement X et les points photosensibles aveugles.

D'autres caractéristiques et avantages de l'invention apparaîtront à la lecture de la description qui suit, illustrée par les figures qui représentent :

- la figure 1, déjà décrite, un exemple d'un détecteur d'image connu ;
- la figure 2, un exemple d'un détecteur d'image selon l'invention apte à fonctionner avec le procédé selon l'invention.

De la même manière que sur la figure 1, les points photosensibles O1 à O6 et R1 à R9 sont montrés avec une photodiode Dp et un élément à fonction d'interrupteur Dc représenté sous la forme d'une diode de commutation. Cette diode de commutation aurait pu être remplacée par un transistor. La photodiode Dp et la diode de commutation Dc sont reliées entre elles dans un montage tête-bêche. Chaque point photosensible est connecté entre un conducteur de ligne Y1 à Y3 et un conducteur de colonne W1, W2 et Z1 à Z3. Les points photosensibles O1 à O6 et R1 à R9 sont arrangés en matrice selon des lignes et des colonnes mais ils pourraient être arrangés en barrette linéaire. Par rapport à l'exemple de la figure 1, le détecteur d'image représenté comporte plus de points photosensibles et plus de conducteurs de colonne mais le même nombre de conducteurs de ligne. Les conducteurs de ligne sont reliés à un dispositif d'adressage 3 comparable à celui décrit à la figure 1.

Selon une caractéristique de l'invention, les points photosensibles sont partagés en deux catégories, des points photosensibles détecteurs R1 à R9 qui, lorsqu'ils sont exposés à une information porteuse d'une image et qu'ils sont sensibles à cette information, sont capables de détecter l'image et des points photosensibles aveugles O1 à O6 servant pour la compensation. Ces points photosensibles aveugles O1 à O6 sont masqués de l'information porteuse d'une image à détecter. Lors de la détection d'une image, que ce soit l'image d'un objet ou d'un patient ou même une image noire (sans éclairement) ou de gain, les points photosensibles aveugles ne reçoivent rien. Ces points photosensibles aveugles O1 à O6 seront lus de la même façon que les points photosensibles détecteurs R1 à R9.

Les points photosensibles aveugles O1 à O6 sont reliés à des portions 20 extrêmes des conducteurs de lignes Y1 à Y3. Dans l'exemple décrit ils sont localisés en début de ligne, ils pourraient être localisés en fin de ligne.

Le nombre de points photosensibles aveugles n'est pas critique une dizaine par ligne semble raisonnable si une ligne compte environ 2000 points photosensibles détecteurs. Ces points photosensibles O1 à O6, R1 à R9 sont implantés sur un support isolant référencé 21.

Pour masquer les points photosensibles aveugles O1 à O6 vis à vis de l'information à laquelle sont exposés les points photosensibles détecteurs, on les recouvre d'un matériau PN opaque à l'information reçue par les points photosensibles détecteurs, de la peinture noire par exemple convient très bien.

Dans la configuration où le détecteur d'image selon l'invention est utilisé dans une application radiologique, les points photosensibles détecteurs R1 à R9 sont recouverts d'un matériau scintillateur SC qui transforme un rayonnement X en un rayonnement dans la bande de longueurs d'onde auxquelles sont sensibles les points photosensibles détecteurs R1 à R9. Quant aux points photosensibles aveugles O1 à O6, ils ne sont pas recouverts du matériau scintillateur SC mais d'un matériau PB opaque au rayonnement X, une couche de plomb par exemple. Dans cette configuration, le matériau PN opaque à l'information reçue par les points photosensibles détecteurs est optionnel mais si on en utilise, on le place entre les points photosensibles aveugles O1 à O6 et le matériau PB opaque au rayonnement X.

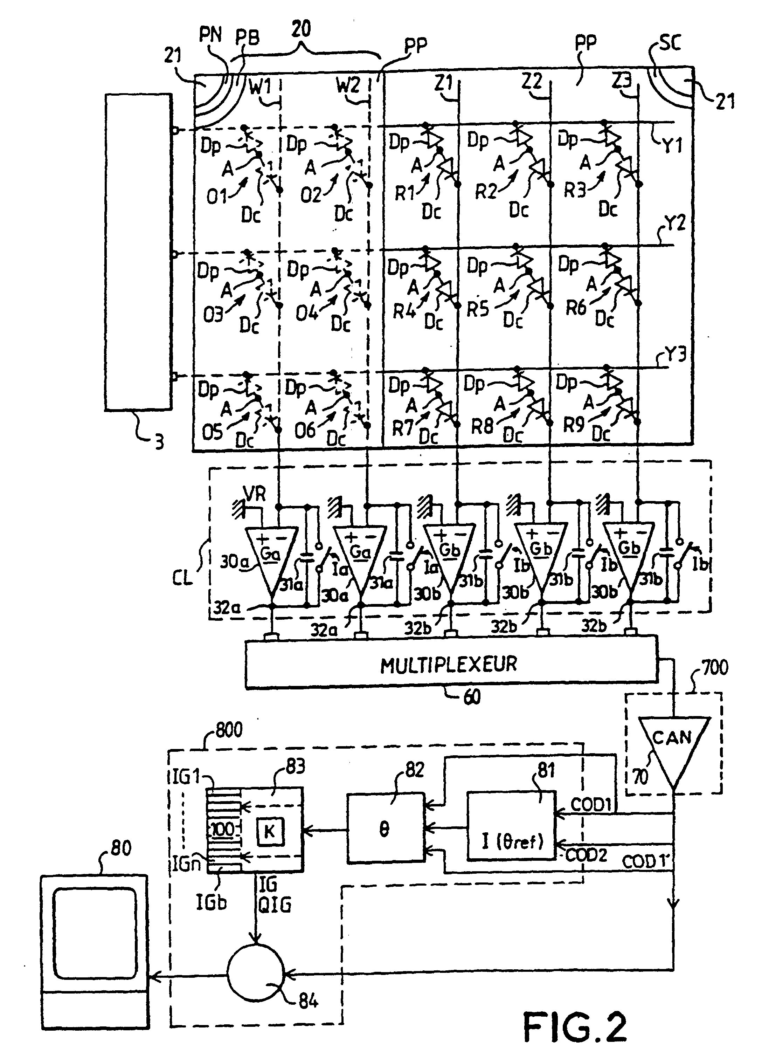

Toute la surface du détecteur d'image du côté d'où provient le rayonnement X est recouvert d'un matériau de protection PP à base par exemple de fibres de carbone. Sur la figure 2, ces matériaux ne sont vus que partiellement

Comme dans l'exemple de la figure 1, le dispositif de lecture CL comporte autant de circuits de lecture 30a, 30b que de conducteurs de colonne W1, W2 et Z1 à Z3 et chacun de ces circuits de lecture est de type circuit intégrateur de charge avec un amplificateur opérationnel Ga, Gb monté en intégrateur à l'aide d'un condensateur de lecture 31a, 31b et un interrupteur de remise à zéro Ia, Ib monté en parallèle avec le condensateur de lecture 31a, 31b. Comme sur la figure 1, les sorties 32a, 32b des circuits intégrateurs Ga, Gb sont connectées à un dispositif de multiplexage 60 qui délivre en série des signaux correspondant aux charges qui ont été intégrées par les circuits intégrateurs de charges. Les signaux délivrés par le dispositif de multiplexage 60 sont ensuite numérisés dans au moins un convertisseur analogique-numérique (CAN) 70. Les signaux issus des circuits de lecture 30b reliés aux points photosensibles détecteurs R1 à R9 traduisent l'image à détecter, les autres issus des circuits de lecture 30a reliés aux points photosensibles aveugles O1 à O6 servent pour la compensation.

Les signaux numérisés sont ensuite transmis à un système de gestion 80 qui peut les stocker, les traiter, les afficher.

Selon le procédé conforme à l'invention, lorsque les points photosensibles sont portés à une température de référence $\theta$ref, on calcule un courant de fuite moyen I$\theta$ref dans les photodiodes des points photosensibles aveugles et on élabore une première moyenne COD1 à partir des signaux délivrés par les points photosensibles aveugles O1 à O6 lors d'une opération de lecture. La température de référence peut être mesurée à l'aide d'un thermomètre.

Lorsque les points photosensibles sont portés à une température ambiante $\theta$ à déterminer, on élabore une autre moyenne COD1' à partir des signaux délivrés par les points photosensibles aveugles O1 à O6 lors d'une autre opération de lecture.

Les deux moyennes COD1, COD1' sont utilisées sous forme numérique et il est préférable de les réaliser à partir des signaux délivrés par les points photosensibles aveugles déjà convertis par le convertisseur analogique-numérique 70. On peut même envisager que ce soit le convertisseur analogique-numérique 70 qui délivre les moyennes. Il est toutefois possible de réaliser les moyennes sous forme analogique et d'effectuer la conversion ensuite. Sur l'exemple non limitatif de la figure 2, les moyens 700 pour élaborer les moyennes sont schématisés par des tirets, ils comprennent le convertisseur analogique-numérique 70.

Les signaux pris en compte pour l'élaboration de la première moyenne COD1 correspondent aux charges stockées par les points photosensibles aveugles avec un premier temps d'intégration t1. Ce premier temps d'intégration est de préférence sensiblement le temps d'intégration nominal du détecteur, c'est à dire le temps d'intégration correspondant à une utilisation courante du détecteur. On peut par exemple donner à t1 une valeur comprise entre 0,5 et 5 secondes.

De la même manière, les signaux pris en compte pour l'élaboration de l'autre moyenne COD1', à température ambiante à déterminer, correspondent aux charges stockées par les points photosensibles aveugles avec un temps d'intégration t1' et ce temps d'intégration t'1 est de préférence sensiblement le temps d'intégration nominal du détecteur et donc sensiblement égal à t1.

On calcule la température ambiante $\theta$ à partir de l'écart entre les moyennes COD1', COD1 et du courant de fuite moyen I$\theta$ref à la température de référence.

Ensuite on élabore une image de gain IG ou une quasi image de gain QIG adaptée à la température ambiante $\theta$ déterminée pour corriger une image détectée alors que les points photosensibles sont toujours portés à la température ambiante 8 déterminée.

On va voir maintenant un exemple de réalisation de ces différentes étapes. Le courant de fuite dans une photodiode varie avec la température de manière exponentielle. Ce courant de fuite est donné par la formule suivante :

$$I\theta = I\theta\text{ref} \times 10^{(\theta-\theta\text{ref})/\theta}$$

Le courant Ip issu d'un point photosensible est donné par :

$$Ip = \frac{COD \times FSR \times Clec}{2^n \times G \times t}$$

avec :

- COD : le code, exprimé en binaire (LSB), délivré par le convertisseur-analogique 70 lors d'une opération de lecture des charges stockées par ce point photosensible après une durée d'intégration de t. La durée d'intégration t correspond au temps écoulé entre deux évacuations successives des charges accumulées au point A du point photosensible. COD peut prendre des valeurs de 0 à $2^{14}$ si le convertisseur possède 14 bits.
- FSR : la plage de tension de codage du convertisseur analogique numérique. Cette plage peut valoir par exemple 4 Volts.
- n est la résolution du convertisseur analogique-numérique. Cette résolution peut être par exemple de 14 bits.
- Clec représente la capacité de lecture équivalente en sortie du circuit de lecture CL.
- G le gain en tension séparant la sortie du circuit de lecture de l'entrée du convertisseur analogique-numérique .

Lors d'une opération de lecture d'un point photosensible aveugle O1 à O6 (qui n'est donc pas exposé à un éclairement), les charges accumulées par ce point photosensible ne correspondent pas exactement au courant de fuite de la photodiode. Ces charges englobent aussi des charges d'entraînement créées dans le point photosensible à partir des impulsions qu'il reçoit du dispositif d'adressage 3 et des charges provenant des points photosensibles reliés au même conducteur de colonne que celui qui est lu.

Pour s'affranchir de ces charges supplémentaires, on effectue une opération de calibration pour calculer le courant de fuite. Lorsque les points photosensibles sont portés à la température de référence θref, on élabore un couple de moyennes COD1, COD2 à partir des signaux délivrés par les points photosensibles aveugles avec deux temps d'intégration différents.

On a supposé par la suite, dans un but de simplification non limitatif, que l'une des moyennes du couple COD1 correspond à celle élaborée à la température de référence θref mais dans l'optique du calcul de la température θ à déterminer. On élabore l'autre moyenne COD2 du couple à partir de signaux délivrés par les points photosensibles aveugles O1 à O6 lors d'une seconde opération de lecture à la température de référence θref.

Le temps d'intégration t1 relatif à la première moyenne COD1 du couple est sensiblement le temps d'intégration nominal du détecteur. Le temps d'intégration t2 relatif à la deuxième moyenne COD2 du couple est supérieur au premier temps t1. On peut par exemple le choisir 2 à 10 fois plus long que le temps t1. Ce temps t2 vaut par exemple 1 à 20 secondes.

Il est préférable que les opérations de lecture pour le calcul du courant de fuite moyen et pour l'élaboration des moyennes soient réalisées à partir d'images noires obtenues lorsque les points photosensibles ne sont exposés à aucun éclairement. Dans une application radiologique cela permet de se passer de rayonnement X. Mais on pourrait envisager d'utiliser des images utiles.

Avec ces deux moyennes COD1, COD2, il est alors facile de calculer le courant de fuite Iθref moyen à la température de référence θref selon la formule :

$$I\theta ref = \frac{(COD2-COD1)xFSRxClec}{2^n xGx(t2-t1)}$$

On peut alors calculer la température ambiante à déterminer θ par la formule :

$$\theta = \theta ref \left[ 1 + \log \left( 1 - \left[ \frac{(COD1'-COD1)xFSRxClec}{2^n xGxI\theta refxt1'} \right] \right) \right]$$

Lorsque la température θ ambiante a été calculée, il suffit d'élaborer une image de gain IG ou une quasi image de gain QIG adaptée à cette température θ ambiante, cette image de gain IG ou cette quasi image de gain QIG va servir pour corriger numériquement, en sensibilité, une image utile à la température θ.

L'élaboration de l'image de gain IG adaptée à la température peut se faire à partir d'une série d'images de gain IG1.....IGn stockées au préalable dans un dispositif à mémoire 100, chacune d'entre elles étant associée à une température. On a soumis, au préalable, le détecteur d'image à une série de températures auxquelles il risque de devoir fonctionner, et pour chacune d'entre elles, on a pris une image de gain IG1.....IGn que l'on a stocké dans le dispositif à mémoire 100 de manière à se constituer une bibliothèque d'images de gain IG1.....IGn.

Si une correction moins précise peut être admise, il suffit de prendre une image de gain de base IGb à une température de base et de déterminer un coefficient K de variation de l'image de gain de base en fonction de la température. L'image de gain de base IGb est stockée dans le dispositif à mémoire 100. Cette variante nécessite moins de capacité mémoire ce qui peut être appréciable. La quasi image de gain QIG est obtenue en appliquant le coefficient K à l'image de gain de base IGb compte tenu de la différence entre la température de base et la température ambiante calculée. La température de base peut être égale à la température de référence θref.

Sur la figure 2, les deux variantes sont illustrées dans le même dispositif à mémoire mais ce n'est pas limitatif. Des mesures effectuées montrent que le coefficient K est de l'ordre de -0, 5%/°C.

Toutes les fonctions qui viennent d'être décrites peuvent être réalisées par le dispositif de gestion 80 lui-même ou par toute unité de traitement 800 placée entre le convertisseur analogique numérique 70 et le dispositif de gestion 80 qui permet alors l'exploitation des images corrigées. La figure 2 montre en détails la configuration avec unité de traitement 800 qui inclut les moyens 81 pour calculer le courant de fuite moyen, les moyens 82 pour calculer la température ambiante θ à déterminer, les moyens 83 pour élaborer l'image de gain IG ou la quasi image de gain QIG qui coopèrent avec le dispositif à mémoire 100 et les moyens de correction 84. Ces moyens de correction 84 reçoivent les signaux délivrés par les points photosensibles lors d'une opération de lecture d'une image utile à corriger. Ces signaux sont délivrés par le convertisseur analogique-numérique 70.

**Revendications**

1. Procédé de compensation en température de la sensibilité d'un détecteur d'image comportant des points photosensibles (O1 à O6, R1 à R9) avec chacun une photodiode (Dp), reliés à des circuits de lecture (30a, 30b) les points photosensibles étant partagés en des points photosensibles détecteurs (R1 à R9) capables de détecter une image lorsqu'ils sont exposés à une information porteuse de l'image et qu'ils sont sensibles à cette information, et en des points aveugles (O1 à O6) protégés de l'information, **caractérisé en ce qu'**il consiste :

   - lorsque les points photosensibles (O1 à O6, R1 à R9) sont portés à une température de référence (θref), à calculer un courant de fuite moyen (Iθref) dans les photodiodes des points photosensibles aveugles (O1 à O6), et à élaborer une première moyenne (COD1) à partir des signaux délivrés par les points photosensibles aveugles (O1 à O6) lors d'une opération de lecture,
   - lorsque les points photosensibles (O1 à O6, R1 à R9) sont portés à une température (θ) ambiante à déterminer, à élaborer une autre moyenne (COD1') à partir des signaux délivrés par les points photosensibles aveugles (O1 à O6), lors d'une autre opération de lecture,
   - à calculer la température (θ) ambiante à partir du courant de fuite moyen (Iθref) et de l'écart entre les deux moyennes (COD1', COD1),
   - à élaborer une image de gain (IG) ou une quasi image de gain (QIG) adaptée à la température ambiante (θ),
   - à corriger une image prise à la température ambiante (θ) avec l'image de gain ou la quasi image de gain.

2. Procédé de compensation selon la revendication 1, **caractérisé en ce que** les signaux délivrés pour l'élaboration de la première moyenne (COD1) et pour l'élaboration de la moyenne (COD1') à la température ambiante à déterminer correspondent à des charges intégrées avec un temps d'intégration (t1) sensiblement égal au temps d'intégration nominal du détecteur d'image.

3. Procédé de compensation selon l'une des revendications 1 ou 2, **caractérisé en ce qu'**il consiste, à la température de référence (θref), pour calculer le courant de fuite moyen (Iθref) à élaborer un couple de moyennes (COD1, COD2) à partir des signaux délivrés par les points photosensibles aveugles avec deux temps d'intégration différents (t1, t2) et réaliser une calibration avec le couple de moyennes (COD1, COD2).

4. Procédé de compensation selon la revendication 3, **caractérisé en ce que**, l'une (COD1) des moyennes du couple est la première moyenne.

5. Procédé de compensation selon la revendication 4, **caractérisé en ce que** l'autre moyenne (COD2) du couple correspond à des charges intégrées avec un temps d'intégration (t2) supérieur au temps d'intégration nominal du détecteur d'image.

6. Procédé de compensation selon l'une des revendications 1 à 5, **caractérisé en ce qu'**il consiste à élaborer l'image de gain (IG) adaptée à la température (θ) déterminée à partir d'une série d'images de gain (IG1...IGn) stockées au préalable dans un dispositif à mémoire (100), chacune d'entre ayant été prises à une température particulière différente, l'ensemble de ces températures particulières formant une plage de températures auxquelles le détecteur d'image est susceptible de fonctionner.

7. Procédé de compensation selon l'une des revendications 1 à 5, **caractérisé en ce qu'**il consiste à élaborer la quasi image de gain (QIG) adaptée à la température ambiante déterminée, à partir d'une image de gain de base (IGb) prise à une température de base, corrigée à l'aide d'un coefficient (K) de variation de l'image de gain de base avec la température compte tenu de la différence entre la température ambiante calculée et la température de base.

8. Procédé de compensation selon l'une des revendications 1 à 7, **caractérisé en ce qu'**il consiste à réaliser les opérations de lecture pour l'élaboration des moyennes (COD1, COD2, COD'1) sur une image noire.

9. Détecteur d'image pour la mise en oeuvre du procédé selon l'une des revendications 1 à 8, comportant des points photosensibles (O1 à O6, R1 à R9) avec chacun une photodiode (Dp), ces points photosensibles étant reliés à des circuits de lecture (30a, 30b), et étant partagés en des points photosensibles détecteurs (R1 à R9) capables de détecter une image lorsqu'ils sont exposés à une information porteuse de l'image et en des points aveugles (O1 à O6) protégés de l'information, **caractérisé en ce qu'**il comporte des moyens (700) pour calculer les moyennes (COD1, COD1') à partir des signaux délivrés par les points photosensibles aveugles, des moyens (81) pour calculer le courant de fuite moyen (Iθref) dans les photodiodes des points photosensibles aveugles, des moyens (82) pour calculer la température ambiante (θ) à partir du courant de fuite moyen (Iθref) et d'un écart entre moyennes, des moyens (83) pour élaborer l'image de gain (IG) ou la quasi image de gain (QIG) à partir de la température ambiante calculée et des moyens (84) pour corriger une image prise à la température ambiante avec l'image de gain ou la quasi image de gain.

10. Détecteur d'image selon la revendication 9, **caractérisé en ce que** les moyens (81) pour calculer le courant de fuite moyen reçoivent des moyennes (COD1, COD2) sous forme numérique.

11. Détecteur d'image selon l'une des revendications 9 ou 10, **caractérisé en ce que** les moyens (83) pour élaborer l'image de gain (IG) comportent un dispositif à mémoire (100) contenant une ou plusieurs images de gains (IG1... IGn), chacune correspondant à une température.

12. Détecteur d'image selon l'une des revendications 9 à 11, **caractérisé en ce que** les moyens(83) pour élaborer la quasi image de gain comportent un dispositif à mémoire (100) contenant une image de gain de base (IGb) prise à une température de base et un coefficient (K) de variation de l'image de base avec la température.

13. Détecteur d'image selon l'une des revendications 9 à 12, **caractérisé en ce que** les points photosensibles aveugles sont reliés à des portions extrêmes (20) de conducteurs (Y1 à Y3) auxquels sont reliés les points photosensibles détecteurs (R1 à R9).

14. Détecteur d'image selon l'une des revendications 9 à 13, **caractérisé en ce que** les points photosensibles aveugles sont recouverts d'un matériau (PN) opaque à l'information reçue par les points photosensibles détecteurs, ce matériau étant notamment de la peinture noire.

15. Détecteur d'image selon la revendication 14, **caractérisé en ce que** les points photosensibles détecteurs (R1 à R9) sont recouverts d'un matériau scintillateur (SC) qui transforme un rayonnement X en un rayonnement auquel ils sont sensibles, les points photosensibles aveugles (O1 à O6) étant recouverts d'un matériau opaque (PB) au rayonnement X tel que du plomb.

16. Détecteur d'image selon la revendication 15, **caractérisé en ce que**, le matériau opaque (PN) à l'information se trouve entre le matériau (PB) opaque au rayonnement X et les points photosensibles aveugles (O1 à O6).

## Claims

1. Method for temperature compensation of the sensitivity of an image detector comprising photosensitive spots (O1 to O6, R1 to R9) each with a photodiode (Dp), these being connected to read circuits (30a, 30b), the photosensitive spots being divided into detecting photosensitive spots (R1 to R9), capable of detecting an image when they are exposed to information carrying the image and are sensitive to this information, and into blind spots (O1 to O6) protected from the information, **characterized in that** it consists:

   - when the photosensitive spots (O1 to O6, R1 to R9) are taken to a reference temperature (θref), in calculating an average leakage current (Iθref) in the photodiodes of the blind photosensitive spots (O1 to O6) and in generating a first average (COD1) from the signals delivered by the blind photosensitive spots (O1 to O6) during a read operation;

- when the photosensitive spots (O1 to O6, R1 to R9) are taken to an ambient temperature (θ) to be determined, in generating another average (COD1') from the signals delivered by the blind photosensitive spots (O1 to O6) during another read operation;

- in calculating the ambient temperature (θ) from the average leakage current (Iθref) and from the difference between the two averages (COD1', COD1);

- in generating a gain image (GI) or a quasi gain image (QGI) matched to the ambient temperature (θ); and

- in correcting an image recorded at the ambient temperature (θ) with the gain image or the quasi gain image.

2. Compensation method according to Claim 1, **characterized in that** the signals delivered for generating the first average (COD1) and for generating the average (COD1') at the ambient temperature to be determined correspond to charges integrated over an integration time (T1) approximately equal to the nominal integration time of the image detector.

3. Compensation method according to either of Claims 1 and 2, **characterized in that** it consists, at the reference temperature (θref), in order to calculate the average leakage current (Iθref), in generating a pair of averages (COD1, COD2) from the signals delivered by the blind photosensitive spots over two different integration times (tl, t2) and in making a calibration using the pair of averages (COD1, COD2).

4. Compensation method according to Claim 3, **characterized in that** one (COD1) of the averages of the pair is the first average.

5. Compensation method according to Claim 4, **characterized in that** the other average (COD2) of the pair corresponds to charges integrated over an integration time (t2) longer than the nominal integration time of the image detector.

6. Compensation method according to one of Claims 1 to 5, **characterized in that** it consists in generating the gain image (GI) matched to the determined temperature (θ) from a series of gain images ($GI_1...Gi_n$) stored beforehand in a memory device (100), each of them being recorded at a different particular temperature, all of these particular temperatures forming a range of temperatures at which the image detector is likely to operate.

7. Compensation method according to one of Claims 1 to 5, **characterized in that** it consists in generating the quasi gain image (QGI) matched to the determined ambient temperature, from a base gain image (bGI) recorded at a base temperature, corrected with the aid of a coefficient (K) of variation of the base gain image with temperature, taking into account the difference between the calculated ambient temperature and the base temperature.

8. Compensation method according to one of Claims 1 to 7, **characterized in that** it consists in carrying out the read operations for generating the averages (COD1, COD2, COD'1) on a black image.

9. Image detector for implementing the method according to one of Claims 1 to 8, comprising photosensitive spots (O1 to O6, R1 to R9) each with a photodiode (Dp), these photosensitive spots being connected to read circuits (30a, 30b) and being divided into detecting photosensitive spots (R1 to R9), capable of detecting an image when they are exposed to information carrying the image, and into blind spots (O1 to O6) protected from the information, **characterized in that** it comprises means (700) for calculating the averages (COD1, COD1') from the signals delivered by the blind photosensitive spots, means (81) for calculating the average leakage current (Iθref) in the diodes of the blind photosensitive spots, means (82) for calculating the ambient temperature (θ) from the average leakage current (Iθref) and from the difference between averages, means (83) for generating the gain image (GI) or the quasi gain image (QGI) from the calculated ambient temperature and means (84) for correcting an image recorded at the ambient temperature with the gain image or the quasi gain image.

10. Image detector according to Claim 9, **characterized in that** the means (81) for calculating the average leakage current receive averages (COD1, COD2) in digital form.

11. Image detector according to either of Claims 9 and 10, **characterized in that** the means (83) for generating the gain image (GI) comprise a memory device (100) containing one or more gain images ($GI_1...GI_n$), each corresponding to one temperature.

**12.** Image detector according to one of Claims 9 to 11, **characterized in that** means (83) for generating the quasi gain image comprise a memory device (100) containing a base gain image (bGI) recorded at a base temperature and a coefficient (K) of variation of the base image with temperature.

**13.** Image detector according to one of Claims 9 to 12, **characterized in that** the blind photosensitive spots are connected to outermost portions (20) of the conductors (Y1 to Y3) to which the detecting photosensitive spots (R1 to R9) are connected.

**14.** Image detector according to one of Claims 9 to 13, **characterized in that** the blind photosensitive spots are covered with a material (PN) opaque to the information received by the detecting photosensitive spots, this material being in particular black paint.

**15.** Image detector according to Claim 14, **characterized in that** the detecting photosensitive spots (R1 to R9) are covered with a scintillator material (SC) which converts X-radiation into radiation to which they are sensitive, the blind photosensitive spots (O1 to O6) being covered with an X-ray-opaque material (PB), such as lead.

**16.** Image detector according to Claim 15, **characterized in that** the material (PN) opaque to the information lies between the X-ray-opaque material (PB) and the blind photosensitive spots (O1 to O6).

**Patentansprüche**

**1.** Verfahren zur Temperaturkompensation der Empfindlichkeit eines Bilddetektors mit lichtempfindlichen Punkten (O1 bis O6, R1 bis R9) mit jeweils einer Fotodiode (Dp), die mit Leseschaltungen (30a, 30b) verbunden sind, wobei die lichtempfindlichen Punkte in lichtempfindliche Detektorpunkte (R1 bis R9) eingeteilt sind, die ein Bild erkennen können, wenn sie einer bildtragenden Information ausgesetzt sind, und die für diese Information empfindlich sind, und in vor der Information geschützte Blindpunkte (O1 bis O6), **dadurch gekennzeichnet, daß** es aus folgendem besteht:

- wenn die lichtempfindlichen Punkte (01 bis 06, R1 bis R9) auf eine Bezugstemperatur (θref) gebracht werden, Berechnen eines mittleren Leckstroms (Iθref) in den Fotodioden der lichtempfindlichen Blindpunkte (O1 bis O6) und Ausarbeiten eines ersten Durchschnitts (COD1) von den von den lichtempfindlichen Blindpunkten (O1 bis O6) abgegebenen Signalen während eines Lesevorgangs,
- wenn die lichtempfindlichen Punkte (O1 bis O6, R1 bis R9) auf eine zu bestimmende Umgebungstemperatur (θ) gebracht werden, Ausarbeiten eines anderen Durchschnitts (COD1') von den von den lichtempfindlichen Blindpunkten (O1 bis O6) abgegebenen Signalen während eines weiteren Lesevorgangs,
- Berechnen der Umgebungstemperatur (θ) aus dem mittleren Leckstrom (Iθref) und des Abstands zwischen den zwei Durchschnitten (COD1', COD1),
- Ausarbeiten eines Gewinnbildes (IG) oder eines Quasi-Gewinnbildes (QIG), der an die Umgebungstemperatur (θ) angepaßt ist,
- Korrigieren eines bei der Umgebungstemperatur (θ) aufgenommenen Bildes mit dem Gewinnbild oder dem Quasi-Gewinnbild.

**2.** Kompensationsverfahren nach Anspruch 1, **dadurch gekennzeichnet, daß** die zum Ausarbeiten des ersten Durchschnitts (COD1) und zum Ausarbeiten des Durchschnitts (COD1') bei der zu bestimmenden Umgebungstemperatur abgegebenen Signale Ladungen entsprechen, die mit einer Integrationszeit (t1) integriert sind, die im wesentlichen gleich der nominellen Integrationszeit des Bilddetektors ist.

**3.** Kompensationsverfahren nach einem der Ansprüche 1 oder 2, **dadurch gekennzeichnet, daß** es folgendes umfaßt: bei der Bezugstemperatur (θref), zum Berechnen des mittleren Leckstroms (Iθref), Ausarbeiten eines Paars von Durchschnitten (COD1, COD2) von den von den lichtempfindlichen Blindpunkten abgegebenen Signalen mit zwei unterschiedlichen Integrationszeiten (t1, t2) und Ausführen eines Abgleichs mit dem Paar von Durchschnitten (COD1, COD2).

**4.** Kompensationsverfahren nach Anspruch 3, **dadurch gekennzeichnet, daß** einer (COD1) der Durchschnitte des Paars der erste Durchschnitt ist.

**5.** Kompensationsverfahren nach Anspruch 4, **dadurch gekennzeichnet, daß** der andere Durchschnitt (COD2) des Paars Ladungen entspricht, die mit einer höheren Integrationszeit (t2) als die nominelle Integrationszeit des Bilddetektors integriert worden sind.

6. Kompensationsverfahren nach einem der Ansprüche 1 bis 5, **dadurch gekennzeichnet, daß** es folgendes umfaßt: Ausarbeiten des an die Temperatur ($\theta$) angepaßten Gewinnbildes (IG - image de gain), das aus einer Reihe von im voraus in einer Speichervorrichtung (100) gespeicherten Gewinnbildern (IG1...IGn) bestimmt worden ist, die jeweils bei einer anderen bestimmten Temperatur aufgenommen worden sind, wobei die Gruppe dieser bestimmten Temperaturen einen Bereich von Temperaturen bildet, bei denen der Bilddetektor funktionieren kann.

7. Kompensationsverfahren nach einem der Ansprüche 1 bis 5, **dadurch gekennzeichnet, daß** es folgendes umfaßt: Ausarbeiten des an die bestimmte Umgebungstemperatur angepaßten Quasi-Gewinnbildes (QIG - quasi image de gain) von einem bei einer Grundtemperatur aufgenommenen Grund-Gewinnbild (IGb - image de gain de base), korrigiert mittels eines Koeffizienten (K) der Veränderung des Grund-Gewinnbildes mit der Temperatur unter Berücksichtigung der Differenz zwischen der berechneten Umgebungstemperatur und der Grundtemperatur.

8. Kompensationsverfahren nach einem der Ansprüche 1 bis 7, **dadurch gekennzeichnet, daß** es folgendes umfaßt: Ausführen von Leseoperationen zur Ausarbeitung der Durchschnitte (COD1, COD2, COD'1) auf einem schwarzen Bild.

9. Bilddetektor zur Durchführung des Verfahrens nach einem der Ansprüche 1 bis 8 mit lichtempfindlichen Punkten (O1 bis O6, R1 bis R9) mit jeweils einer Fotodiode (Dp), wobei diese lichtempfindlichen Punkte mit Leseschaltungen (30a, 30b) verbunden sind und in lichtempfindliche Detektorpunkte (R1 bis R9) eingeteilt sind, die ein Bild erkennen können, wenn sie einer bildtragenden Information ausgesetzt sind, und in vor der Information geschützte Blindpunkte (01 bis 06), **dadurch gekennzeichnet, daß** er Mittel (700) zum Berechnen der Durchschnitte (COD1, COD1') von durch die lichtempfindlichen Blindpunkte abgegebenen Signalen umfaßt, Mittel (81) zum Berechnen des mittleren Leckstroms (I$\theta$ref) in den Fotodioden der lichtempfindlichen Blindpunkte, Mittel (82) zum Berechnen der Umgebungstemperatur ($\theta$) von dem mittleren Leckstrom (I$\theta$ref) und eines Abstands zwischen den Durchschnitten, Mittel (83) zum Ausarbeiten des Gewinnbildes (IG) oder des Quasi-Gewinnbildes (QIG) von der berechneten Umgebungstemperatur und Mittel (84) zum Korrigieren eines bei der Umgebungstemperatur aufgenommenen Bildes mit dem Gewinnbild oder dem Quasi-Gewinnbild.

10. Bilddetektor nach Anspruch 9, **dadurch gekennzeichnet, daß** die Mittel (81) zum Berechnen des mittleren Leckstroms die Durchschnitte (COD1, COD2) in Digitalform empfangen.

11. Bilddetektor nach einem der Ansprüche 9 oder 10, **dadurch gekennzeichnet, daß** die Mittel (83) zum Ausarbeiten des Gewinnbildes (IG) eine Speichervorrichtung (100) umfassen, die ein oder mehrere Gewinnbilder (IG1...IGn) enthält, die jeweils einer Temperatur entsprechen.

12. Bilddetektor nach einem der Ansprüche 9 bis 11, **dadurch gekennzeichnet, daß** die Mittel (83) zum Ausarbeiten des Quasi-Gewinnbildes eine Speichervorrichtung (100) umfassen, die ein Grund-Gewinnbild (IGb) enthält, das bei einer Grundtemperatur aufgenommen worden ist, und einen Koeffizienten (K) der Veränderung des Grundbildes mit der Temperatur.

13. Bilddetektor nach einem der Ansprüche 9 bis 12, **dadurch gekennzeichnet, daß** die lichtempfindlichen Blindpunkte mit Endteilen (20) von Leitern (Y1 bis Y3) verbunden sind, mit denen die lichtempfindlichen Detektorpunkte (R1 bis R9) verbunden sind.

14. Bilddetektor nach einem der Ansprüche 9 bis 13, **dadurch gekennzeichnet, daß** die lichtempfindlichen Blindpunkte gegen die von den lichtempfindlichen Detektorpunkten empfangene Information mit einem lichtundurchlässigen Material (PN) abgedeckt sind, das insbesondere schwarzer Farbe ist.

15. Bilddetektor nach Anspruch 14, **dadurch gekennzeichnet, daß** die lichtempfindlichen Detektorpunkte (R1 bis R9) mit einem fluoreszierenden Material (SC) abgedeckt sind, das eine X-Strahlung in eine Strahlung umwandelt, für die sie empfindlich sind, wobei die lichtempfindlichen Blindpunkte (O1 bis O6) mit einem für die X-Strahlung undurchlässigen Material (PB) wie beispielsweise Blei abgedeckt sind.

16. Bilddetektor nach Anspruch 15, **dadurch gekennzeichnet, daß** das für die Information lichtundurchlässige Material (PN) zwischen dem für die X-Strahlung undurchlässigen Material (PB) und den lichtempfindlichen Blindpunkten (O1 bis O6) angeordnet ist.

# FIG.1

FIG.2